# EUROPEAN PATENT APPLICATION

(11) **EP 1 047 244 A1**
(43) Date of publication of application: **25.10.2000**
(21) Application number: 99303042.8
(22) Date of filing: 20.04.1999
(51) Int. Cl.: H04L 29/06, H04L 12/56

(54) **Mobile IP supporting quality of service for data sent from mobile node to correspondent node**

(71) Applicant: LUCENT TECHNOLOGIES INC., Murray Hill, New Jersey 07974-0636 (US)
(72) Inventor: Chen, Xiaobao, Swindon, Wilts SN5 7EP (GB)
(74) Representative: Williams, David John

(57) **Abstract**

There is disclosed a method of configuring a quality of service session between a mobile node, having a home address in a home network and being temporarily attached in a foreign network, and a correspondent node in a correspondent network. The mobile node generates a quality of service session request identifying the source address as the mobile node's home address. The method comprises modifying the quality of service request to identify the source address as the mobile node's address in the foreign network. A mobile IP environment in which such a method is utilised is also disclosed.

## Description

### Field of the Invention

The present invention relates to messages conforming to the Internet protocol (IP) and sent from a mobile node temporarily attached in a foreign network to a correspondent node, and is particularly related to maintaining a desired quality of service between the mobile node and the correspondent node.

### Background to the Invention

Current internet protocol (IP) technology, and mobile IP technology, enables a host terminal or host node which is normally connected in a particular network (the nodes 'home' network) to temporarily connect into a different network (a 'foreign' network) and still receive IP packets or messages sent to the host terminal at its address in the home network. Such a host terminal, which changes its point of network attachment, is known as a mobile node.

To still receive IP packets in the foreign network the mobile node must register with a so-called 'home agent' in its home network. In registering with its home agent, the mobile node provides the home agent with a 'care-of' address where it can be addressed in the foreign network. The 'care-of' address may be a co-located care-of address or a foreign agent care-of address. The home agent then monitors traffic in the home network, and if the home agent identifies an IP packet which is carrying a destination address corresponding to the mobile node's home address in the home network, it intercepts the IP packet. The home agent then 're-packages' the IP packet and sends it to the node at the 'care-of' address in the foreign network.

In addition, the mobile node may still send IP packets when it is temporarily attached in a foreign network.

However, one disadvantage with the known techniques for sending an IP packet from a mobile node in a foreign network is that current quality of service techniques such as RSVP cannot be supported.

Each IP packet may have associated therewith, and included in the IP packet, flow identification information which identifies a quality of service associated with the IP packet transmission. This flow identification information is present in fixed locations of the IP packet, where quality of service (QoS) capable routing/switching elements can locate it and operate in dependence on it.

The quality of service (QoS) provisions proposed to be used in the Internet are defined by standards, and in IP one known standard for quality of service signaling is called RSVP. RSVP (Resource Reservation Protocol) is used in the Integrated Services Model (IntServe) quality of service framework defined by IETF. The Integrated Services Model was designed to provide special handling for certain types of traffic, provide mechanisms for applications to choose between multiple levels of delivery services for its traffic, and to provide signaling for quality of service parameters at Layer 3 in the OSI RM.

IntServ defines two classes of services. The Controlled Load Class provides traffic delivery in the same way as when the network is unloaded ("better than best delivery"). The Guaranteed QoS Service Class delivers traffic for applications with a bandwidth guarantee and delay bound.

IntServ requires QoS capable nodes and a signaling protocol to communicate QoS requirements between applications and nodes and between nodes.

RSVP is the QoS signaling protocol used by IntServ. RSVP provides receiver QoS requests to all router nodes along the transit Path of the traffic, maintains the soft-state (Path/Reservation states), and results in resources being reserved in each router.

For RSVP/IntServ quality of service to operate, the flow identification information must be in a fixed location in the IP packets. An RSVP session is configured by the host terminals exchanging so-called Path and Reservation messages prior to data transmission.

To enable the quality of service control across the transit path between peer host terminals, each host terminal must therefore have the functionality to configure the necessary messages and recognise quality of service requests corresponding to an RSVP session.

Mobile IP techniques do not provide for the support of quality of service sessions for data sent from a mobile node in a foreign network to a correspondent node (i.e. a communication peer of the mobile node).

It is therefore an object of the present invention to provide a technique which enables the quality of service requirement determined by the source of the message to be supported throughout the routing of the message to a mobile node's 'care-of' address to a correspondent node when the mobile node is temporarily attached in a foreign network.

### Summary of the Invention

According to the present invention there is provided a method of configuring a quality of service session between a mobile node, having a home address in a home network and being temporarily attached in a foreign network, and a correspondent node in a correspondent network, wherein the mobile node generates a quality of service session request identifying the source address as the mobile node's home address, the method comprising modifying the quality of service request to identify the source address as the mobile node's address in the foreign network.

The step of modifying the quality of service session request may be carried out in the foreign network, the method further comprising the step of further modifying the quality of service session request in the correspondent network to identify the source address as the mobile node's home address.

The correspondent node may generate a quality of service reply identifying the destination address as the mobile node's home address, the method further comprising modifying the quality of service session reply to identify the mobile node's address in the foreign network.

The step of modifying the quality of service reply may be carried out in the correspondent network, the method further comprising the step of further modifying the quality of service reply in the foreign network to identify the destination address as the mobile node's home address.

Once the quality of service session is configured, the source address of all IP packets from the mobile node may be modified to identify the mobile node's address in the foreign network. The source address of all IP packets may be modified in the foreign network, the source address being further modified in the correspondent network to the mobile node's home address.

According to the present invention there is also provided a mobile IP environment capable of supporting a quality of service session between a mobile node, having a home address in a home network and being temporarily attached in a foreign network, and a correspondent node in a correspondent network, wherein the foreign network includes means associated with the mobile node for generating a modified quality of service request identifying the source address as the mobile node's address in the foreign network.

The correspondent network may include means associated with the correspondent node for generating a further modified quality of service request identifying the source address as the mobile node's home address.

The means associated with the correspondent node may generate a modified quality of service reply having a mobile node care-of address in the foreign network.

The means associated with the mobile node may generate a further modified quality of service reply having a destination address of the mobile node's home address. The mobile node may be adapted to provide the means associated with the mobile node. A proxy server may provide the means associated with the mobile node.

The correspondent node may be adapted to provide the means associated with the correspondent node. A proxy server may provide the means associated with the correspondent node.

In the IP environment there may further be provided means for modifying the source address of all IP packets from the mobile node to identify the mobile node's address in the foreign network once the quality of service session is configured.

The IP environment may further comprise means in the correspondent network for further modifying the source address of all IP packets from the mobile node to the mobile node's home address. The mobile node may be adapted to provide the means for modifying the source address. The means in the correspondent network may be a correspondent agent.

### Brief Description of the Figures

Figure 1 illustrates a network set-up including a home network, a correspondent network, and a foreign network;
Figures 2(a) to 2(c) illustrate the standard format of an IP packet;
Figure 3 illustrates the network set-up of Figure 1 in which the foreign network includes a foreign agent;
Figure 4(a) illustrates the IP packets of a Path message of a quality of service session in RSVP;
Figure 4(b) illustrates the general end-to-end structure of a Reservation message in RSVP;
Figure 5 illustrates a network scenario in which a mobile node sends data to a correspondent node;
Figure 6 illustrates the method steps for configuring an RSVP session between the mobile node and the correspondent node in the scenario of Figure 5;
Figures 7(a) and 7(b) illustrates the general structure of Path and Reservation messages between the mobile node and correspondent node of Figure 5; and
Figure 8(a) to 8(c) illustrate the general structure of IP packets of data messages sent from the mobile node to the correspondent node.

### Description of Preferred Embodiment

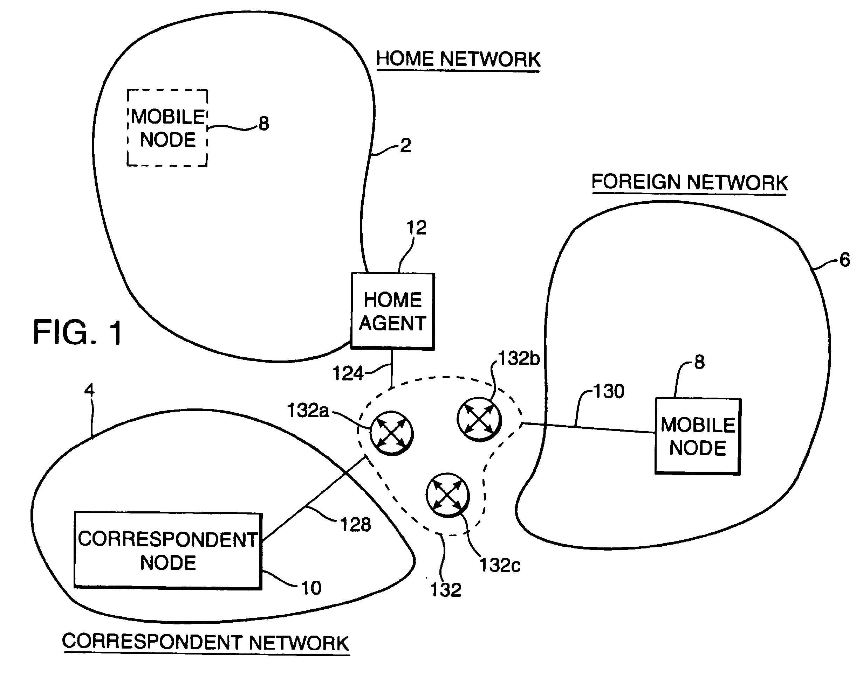

Referring to Figure 1 there is shown a typical network set-up. A mobile node MN 8 is normally located in a home network 2. The mobile node MN 8 normally resides in the home network 2 at a particular address. This address is not necessarily a static IP address: the mobile node may be located at any physical point in the network, but a particular IP address is associated with the mobile node itself (rather than the physical point of connection). The home network may physically span a small office environment, or may span a number of countries.

The mobile node MN 8 may be connected to the home network 2 by a wireless LAN, infrared link, wireless telephone link or via a direct Ethernet or token ring network hook-up. The term 'mobile node' does not imply that the node is connected to the network via a wireless link: rather it implies that the mobile node may move outside the home network 2 into a foreign network such as the foreign network 6 of Figure 1, as will be discussed in further detail hereinafter.

The arrangement of Figure 1 also shows a correspondent network 4 including a correspondent node CN 10. The correspondent node may also be in a foreign network, that is a network independent of and distinct from the home network 2. However, the term foreign network is reserved for use to refer to a network which hosts a mobile node which normally resides in a different network (its home network). For the purposes of this illustrative example, the mobile node 8 of the home network 2 has moved to the foreign network 6. Thus the mobile node MN 8 is shown in the home network 2 in dashed lines to indicate that it is normally present there, and is shown in the foreign network FN 6 in a solid line to indicate that it is temporarily present in the foreign network 6.

The terms correspondent node and correspondent network are reserved for use to describe communication peers of the mobile node 8. A correspondent node is a node (which may be another mobile node) with which a mobile node is currently communicating: either receiving an IP packet or transmitting an IP packet. A correspondent network is used to refer to the network to which the correspondent node is connected. It should be appreciated that the mobile node may be communicating with a correspondent node in its own home network, and therefore the correspondent network may be the home network itself.

As can be seen from Figure 1, and as will be discussed further hereinafter, the home network 2 further includes a home agent 12.

The various elements in the networks communicate with elements in other networks via the routing network 132, including routing switches 132a to 132c. Thus the correspondent node 10 is shown to have a network link connection 128, the home agent 12 is shown to have a network link connection 124, and the mobile node 8 in the foreign network is shown to have a network link connection 130.

A brief example of the 'normal' communication between the mobile node MN 8 and the correspondent node CN 10 will now be given. The present invention is specifically related to communication from the mobile node to the correspondent node when the mobile node is temporarily attached in the foreign network, and thus an example of the conventional communication from the mobile node (when in a foreign network) to the correspondent node is given hereinbelow.

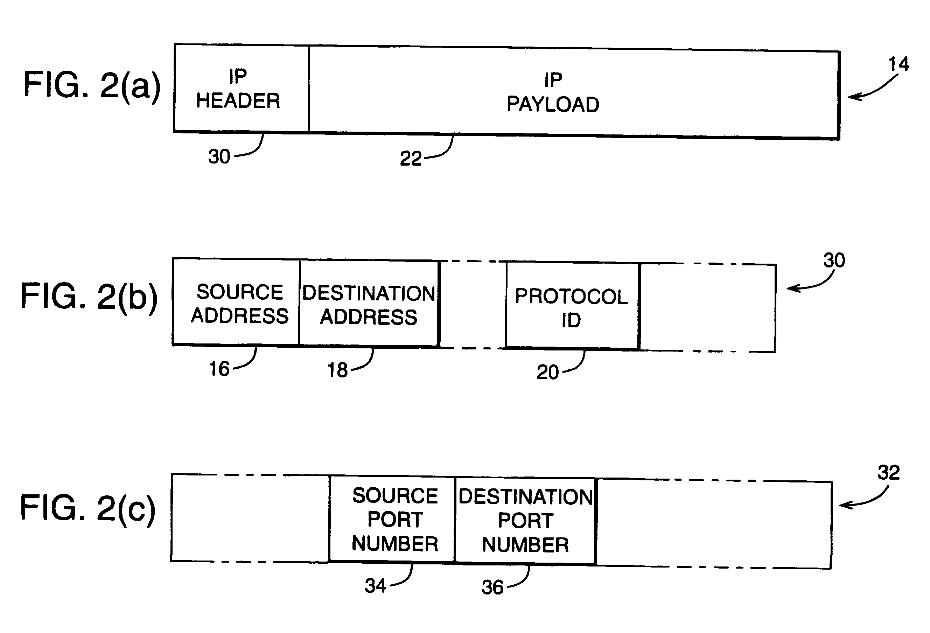

Referring to Figure 2(a), there is shown the general structure of an IP packet 14 sent by the mobile node MN 8 to the correspondent node CN 10.

An IP packet transmitted between networks, generally designated by reference numeral 14 and illustrated in Figure 2(a), comprises an IP header 30, and an IP payload 22. The IP payload 22 is the information portion of the IP packet to be delivered to the destination node. The parts of the IP packet which are relevant to the present discussion are illustrated in Figures 2(b) and 2(c). The IP header 30, shown in Figure 2(b), includes a source address portion 16, a destination address portion 18, and a protocol ID portion 20. The IP header 30 contains other fields which are not shown in Figure 2(b) since they are not relevant to the present explanation.

Referring to Figure 2(c), the IP payload 32 includes a source port number 34 and a destination port number 36. Again, the IP payload includes other fields which are not relevant for the purposes of the present explanation.

The source address 16 is the IP address of the host terminal (in this example, the mobile node) from which the IP packet is sent, and the destination address 18 is the IP home address of the host terminal (e.g. the correspondent node) to which the IP packet is to be sent. The source port number 34 is the port number used by an application at the mobile node 8 associated with the IP packet 14. The destination port number is the port number used by an application at the correspondent node 10 to which the IP packet is being sent. In addition to other uses, the protocol ID 20 is one of the indications of the quality of service to be supported in transmitting the IP packet from the source applications to the destination applications. As will be appreciated by one familiar with the art, the destination and source addresses are used by routing switches between the mobile node and the correspondent node to route the IP packet to its destination.

When the routers or routing switches support quality of service (QoS), in some QoS control provisions, such as RSVP and IntServ, the protocol ID 20 is used together with the source and destination addresses 16 and 18, plus the communication port numbers of end applications (i.e. the source port number 34 and the destination port number 36) for differentiating flows and imposing the necessary QoS control.

The QoS control imposed on the data traffic flows at the intermediate routers is system dependent. For example, it can be the so-called WFQ (Weighted Fair Queuing ) or CBQ (Classed Based Queuing). They are not standard and vendor specific but usually independent of the actual user's protocol ID.

The IETF's IntSer/RSVP standard is defined to provide a QoS specification and signaling mechanism but not a QoS control mechanism. Intserve/RSVP is independent of the actual QoS control mechanisms, such as WFQ, CBQ etc.

The status based on which QoS control is performed is set up in the routing switches prior to data transmission by means of the specific quality of service signaling protocol, such as RSVP.

A known way of routing an IP packet from the mobile node to the correspondent node when the mobile node has moved to a position in the foreign network will now be described.

When the mobile node is temporarily attached in the foreign network, it registers with the home agent 12 to ensure messages sent to it at its home address are re-directed to it at its care-of address. The registration of the mobile node, and the forwarding of messages to the mobile node, will be familiar to one skilled in the art. These mechanisms are not described in detail herein because the present invention is solely concerned with the mobile node sending messages, and not receiving messages.

In the example shown in Figure 1, after moving to the foreign network 6 the mobile node 8 is allocated a unique 'care-of address of its own and registers directly with the home agent 12 in the home network. This is known as CO-COA (co-located care-of address) working mode. An alternative working mode is known as FA-COA (foreign agent care-of address) working mode. The manner in which the mobile node may register with the home agent is well-known in mobile IP, and is not relevant to the present invention and therefore not discussed herein.

The mobile node MN 8 constructs an IP packet having a format identical to that shown in Figure 2(a).

The IP packet constructed by the mobile node 8 is identical whether the mobile node is positioned in its home network 2 or in the foreign network 6, as the mobile node always identifies its current address as its home address in the home network, regardless of its point of network attachment.

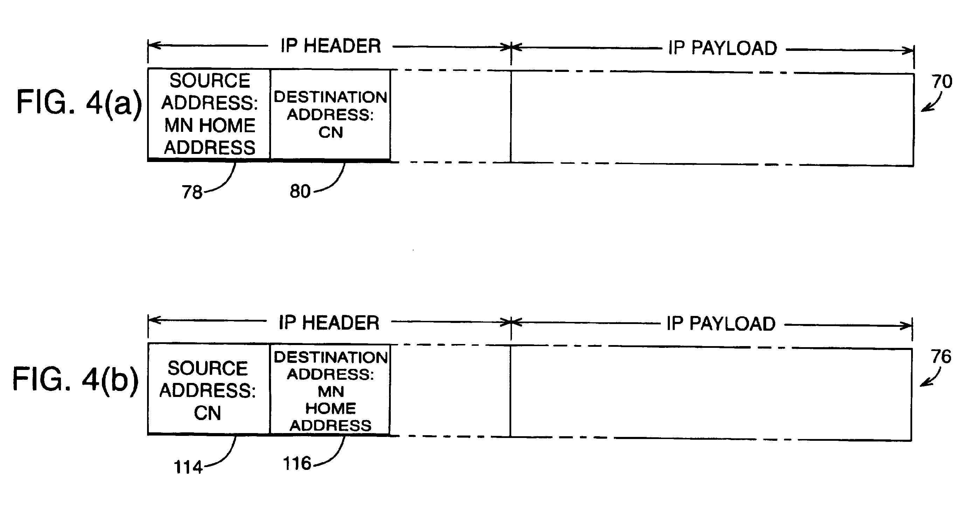

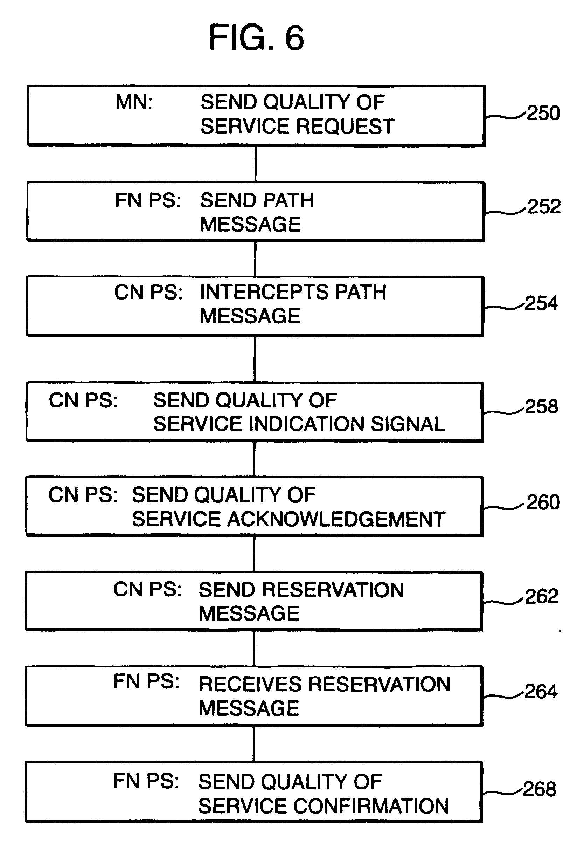

Referring to Figure 4 there is shown an alternative network set-up to that of Figure 1. This network set-up is the same as that of Figure 1, other than that the foreign network 6 is provided with a foreign agent 7. Thus Figure 6 illustrates the foreign agent care-of address working mode. The foreign agent is connected to the network link 130. In this arrangement, the mobile node registers with the foreign agent when it is positioned in the foreign network. The registration of the mobile node with the foreign agent is in accordance with standard mobile IP, and will be familiar to one skilled in the art. The mobile node is aware that the foreign network has a foreign agent either by the foreign agent broadcasting its presence, or by the mobile node soliciting an acknowledgement from the foreign agent of its presence.

The presence or otherwise of the foreign agent does not, in a conventional IP environment, effect the transmission of messages (and hence IP packets) from the mobile node to a correspondent node. Thus the IP packets constructed by the mobile node for communication to a correspondent node in the foreign agent care-of address working mode are identical to those constructed in the co-located care-of address mode.

One disadvantage with using general known IP for transmission of IP messages from the mobile node to a correspondent node, when the mobile node is in the foreign network, is that quality of service sessions, such as RSVP, cannot be supported. The problem will be described herein with reference to the example of an RSVP quality of service session. In general for RSVP to correctly function, the transmit path followed by a so-called Reservation (Resv) message (routed hop-by-hop following the same hops as indicated by a so-called Path message) must be the same path but in the reverse direction of the Path message. (In general for quality of service sessions the Path message can be considered to be a quality of service request and the Reservation message can be considered to be a quality of service reply). That is the source address of the Path message must match the destination address of the Reservation (Resv) message, and the destination address of the Path message must match the source address of the Reservation message. The below example of setting up an RSVP session in the network structure of Figure 1 illustrates why standard IP is not sufficient to support a quality of service session between the mobile node in the foreign network and the correspondent node.

The mobile node 8, which in this example is assumed to be sending a message to the correspondent node 10, sends a standard RSVP Path message including IP packets 70 having the general format shown in Figure 4(a) on line 130.

The IP packets of the messages used in an RSVP session do not have the format shown in Figures 2(a) to 2(c). The IP packets of Figures 2(a) to 2(c) are IP packets of data messages. The IP packets 70 of the Path message of Figure 10(a) have a source address 78 corresponding to the home address of the mobile node (i.e. the mobile node's home address), and a destination address 80 corresponding to the address of the correspondent node 10. Standard IP and mobile IP provide that the applications on a mobile node itself should not be required to be aware of the change of the mobile nodes network attachment points. Therefore regardless of the location of the mobile node (whether in its home network or a foreign network) the mobile node always generates IP packets which identify the source address as being the mobile node's homes address. The mobile node includes a destination address in the Reservation message of the correspondent node address.

The IP packets of the Path message (and other RSVP messages) additionally include other flow identification information in the payload of the IP packets. One skilled in the art will be familiar with the other flow identification information.

The IP packet of the Path message is routed from the mobile node 8 to the correspondent network 4 via a plurality of routing switches, represented by routing network 132.

If the routing switches 132a to 132c support quality of service, then they extract the flow identification information in the IP payload of the Path message IP packets, and store this flow identification information. This flow identification information includes: the source address, the destination address, the source port number, the destination port number, and the protocol ID which will be included in all IP data packets transmitted from the source to the destination after the quality of service session has been set up. One of the routing switches 132 routes the IP packets of the Path message to another routing switch, and then additionally stores with the flow identification information extracted from the IP packet the address of the routing switch to which it sent the message (the next hop) and the address of the routing switch from which it received the message (the previous hop).

In practice the IP packets may reach the correspondent network via a plurality of routing switches, and each routing switch stores the flow identification information extracted from the IP packets of the Path message, together with the identity of the routing switch from which the IP packet was sent and the routing switch to which the IP packet was sent.

Thus the IP packets of the Path message travel from the mobile node to the correspondent network through the routing network. Each routing switch retains the address of the previous hop from which the IP packet was sent together with the next hop to which the IP packet was sent, and additionally the flow identification information for the IP packet. The routing switches also process the other traffic related information in the Path message, the nature of which is not relevant to a discussion of the present invention.

After a successful quality of service session has been set up, when another IP packet arrives at a particular routing switch having the same flow identification information that has been stored in the routing switch memory, the routing switch forwards it to the exact same next hop, the address of which is stored in memory.

Thus at successive hops, each routing switch (provided it supports RSVP quality of service) retrieves the flow identification information from the fixed locations of the IP packets of the Path message and stores them in memory, together with the addresses of the next and previous hops. Thus the flow identification information in the IP packets helps to uniquely identify a message flow, so that all IP packets associated with that message flow can be routed from the source to the destination through the exact same network path.

The correspondent node receives the Path message from the mobile node and creates a Reservation message for transmission having IP packets 76 of the general format as illustrated in Figure 4(b).

It will be understood by one skilled in the art that the IP packets of a Reservation message (Resv) are transmitted hop-by-hop back along the identical network path as the IP packets of the Path message. Thus the source and destination addresses of the IP packets of the Reservation messages are actually the next and previous hops. The value of the source and destination addresses are thus determined dynamically as the Reservation messages transit through the path. Thus the structure of the IP packets 76 of the Reservation message shown in Figure 4(b) is actually representative of the transport layer of the Reservation messages. Thus the structure shown in Figure 4(b) illustrates the general concept of a Reservation message, that is the originating source address and the ultimate destination address. This analysis of the Reservation message is somewhat artificial, but serves to best illustrate the principle of RSVP.

The correspondent node 10 identifies the source address 114 as the correspondent node's home address, and the destination address 116 ass the mobile node's home address.

Comparing the IP packets of the Path and Reservation messages shown Figures 6(b) and 6(c), the conditions for a successful RSVP session apparently do exist. However, a successful RSVP session can not in fact be established.

As discussed hereinabove the applications running on the mobile node always identify the mobile node's home address as their IP address, regardless of whether it is in the foreign network or its home network. Thus a Path message generated by the mobile node directly identifies a source address of the mobile node's home address, and a destination address of the correspondent node. As discussed above, the source and destination addresses of the Path and Reservation messages in RSVP must be "swapped", and if the correspondent node sent a Reservation message with the mobile node's home address as the destination address, as described with reference to Figures 4(a) and 4(b), then the RSVP session would not be set-up, because this is not the correct destination address of the mobile node. The Reservation message would fail to be routed back to the foreign network where the mobile node is located, and therefore the RSVP session would not be able to be set up.

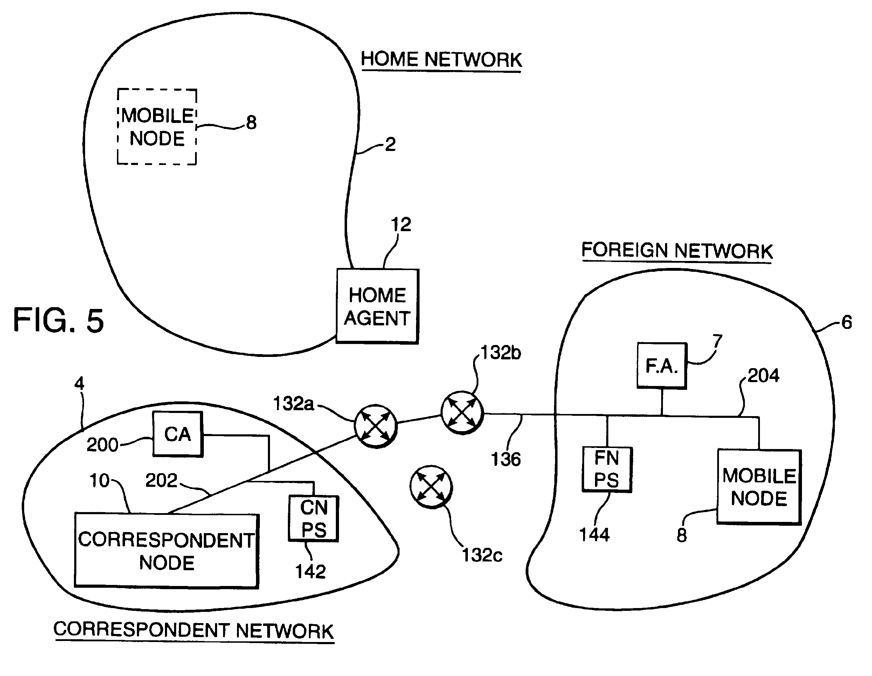

Referring to Figure 5, there is shown the network arrangement of Figure 1 adapted to enable IP to support a quality of service session such as RSVP when the mobile node initiates the RSVP session. In the arrangement shown a so-called proxy server is introduced into the correspondent network and the foreign network. However, it should be understood from the following description that the functionality of the proxy server may in practice be incorporated into the host terminals to which the proxy servers are connected.

Referring to Figure 5, the networks of Figure 1 are adapted such that the correspondent network 4 additionally includes a correspondent network proxy server 142 and the foreign network 6 additionally includes a foreign network proxy server 144. The correspondent node 10 is connected to the correspondent node proxy server 142 via a network link 202. The network link 202 also connects to the routing switches 132. The foreign network proxy server 144 connects to the mobile node 8 in the foreign network 6 via a network link 204. The network link 204 also connects to the routing switches 132.

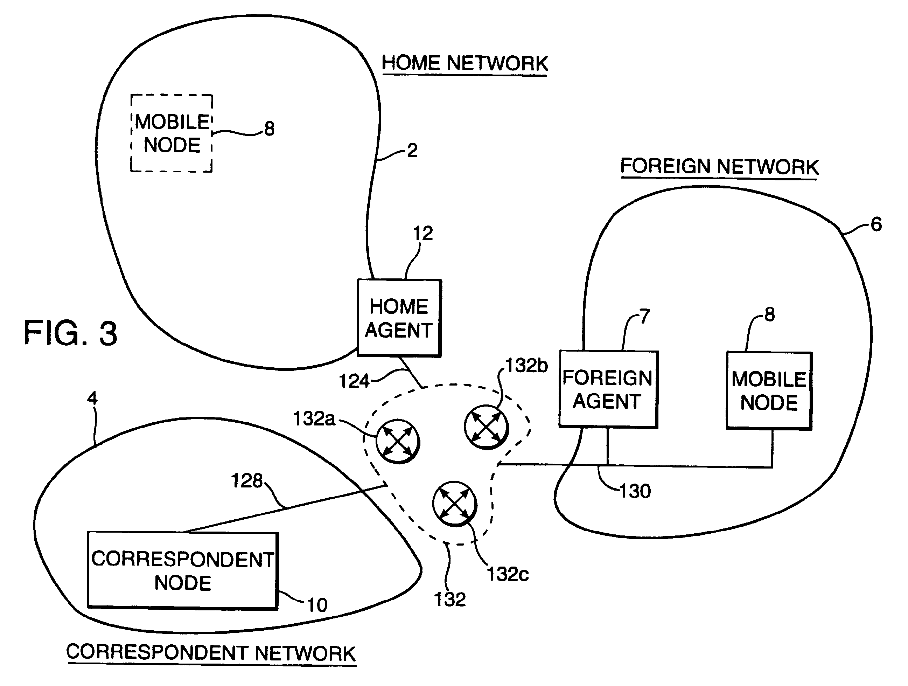

The correspondent network 4 additionally includes a correspondent agent 200. In Figure 5 the correspondent agent 200, the correspondent network proxy server 142, and the correspondent node 10 are all shown interconnected by the common network link 202, which in turn connects the correspondent network into the routing network comprising the routing switches 132. The foreign network 6 additionally includes the foreign agent 7, previously shown in Figure 3. The foreign agent 7, the foreign network proxy server 144, and the mobile node 8 are all shown connected to the common network link 204.

An example of the operation of the adapted network of Figure 5 for sending an IP message from the mobile node 8 in the foreign network to the correspondent node 10 in which RSVP is supported will now be described.

Each host terminal which requires quality of service provision in a network which does not have its own quality of service capability needs to be aware of the existence of a proxy server in the network. That is, there must be a process by which the host terminals can discover proxy servers. There are effectively two ways this can happen. In a first way, host terminals in the network broadcast a server soliciting message (SSM). A proxy server in the network responds by sending back to the host terminal a server response message (SRM). In a second way, the proxy server in a network broadcasts a client request message (CRQM) to the local network. Responsive thereto, host terminals (which can be considered to be proxy server clients) send back a client registration message (CRGM). In this way the presence of the proxy servers in the networks is registered by host terminals in the networks in a similar way as the presence of mobile agents (home agents, foreign agents) is currently registered in standard mobile IP. The implementation of the technique for nodes to register with proxy servers will be within the scope of one skilled in the art.

The preferable technique for establishing a quality of service session, and particularly an RSVP session in mobile IP, for the network arrangement of Figure 5 will now be described with the aid of the flow diagram of Figure 6.

In a step 250 the mobile node 8 initiating a quality of service session sends a quality of service request on network link 204 to the foreign network proxy server 144.

The quality of service request may be implicit or explicit. An explicit quality of service request from the correspondent node specifies an exact quality of service requirement. Thus an explicit quality of service request can be provided only by a correspondent node which has the functionality to support the explicit statement of a particular quality of service. An implicit quality of service request from the correspondent node specifies only the nature of the transmission to be made. For example, an implicit quality of service request may indicate that the data to be sent is video data. The proxy server then determines the appropriate quality of service in dependence on the indication of the type of data.

The foreign network proxy server 144, in a step 252, then sends a standard RSVP Path message. This Path message is communicated to the correspondent network proxy server via the routing switches 132a and 132b.

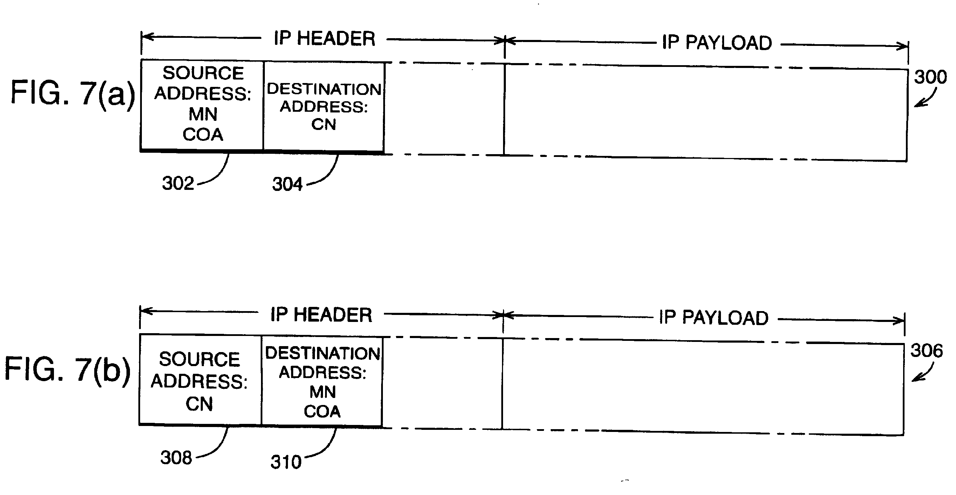

The IP packets of the Path message sent by the foreign node proxy server are shown in Figure 7(a). The IP packets 300 of the Path message of Figure 7(a) have a source address 302 corresponding to the mobile node's care-of address, and a destination address 304 corresponding to the correspondent node's address. The IP packets of the Path message are routed by the routing network comprising the routing switches 132 to the correspondent network 4. The routing takes place in exactly the same manner as described before in accordance with standard IP quality of service techniques.

In a step 254 the Path message illustrated in Figure 7(a) and sent by the foreign network proxy server 144 arrives at the correspondent network and is intercepted by the proxy server 142.

The correspondent network proxy server receives the Path message, and in a step 258, the correspondent network proxy server 142 sends a quality of service indication signal to the correspondent node 10 on the network link 202, indicating the arrival of the Path message from the mobile node 8. If the correspondent node is aware of the quality of service specification sent by the mobile node, the correspondent node sends a quality of service response by way of acknowledgement to the correspondent network proxy server 142 in a step 260 on network link 202.

In a step 262 the correspondent network proxy server then sends a Reservation message confirming the quality of service session. The Reservation message follows the identical route to the Path message (in reverse) to the foreign network proxy server.

The format of the Reservation message 306 sent back by the correspondent node proxy server is illustrated in Figure 7(b). As can be seen, because of the use of the correspondent network proxy server 142 the source address 115 is the correspondent node's address, and the destination address is the mobile node's care-of address. Thus the correct correlation exists between the source and destination addresses of the Path and Reservation messages in the RSVP session, such that the RSVP session is supported.

Again, the message shown in Figure 7(b) is representative of the end-to-end message between the correspondent network and the foreign network. The format shown in Figure 7(b) is not representative of the IP packets of the Reservation message, which as discussed earlier have source and destination addresses corresponding to the next and previous hops.

In a step 264 the foreign network proxy server receives the Reservation message. The RSVP session is completed by the foreign network proxy server sending, in a step 268, a quality of service confirmation message on the network link 204 by way of acknowledgement to the mobile node 8, indicating that the quality of service session has been set up.

The mobile node 8 then begins sending data message packets to the correspondent terminal. Once the RSVP session is set-up as described, and messages are sent from the mobile node to the correspondent node, it is essential that the flow identification information carried by the IP packets of the data messages match that used in the set-up of the RSVP session. Thus the IP data packets, having the general format shown in Figure 2, must include the same source port number, destination port number, and protocol ID contained in the payload of the RSVP message, as well as the source and destination addresses. In this way the data IP packets are uniquely identified as being associated with the flow configured by the RSVP session.

The proxy servers 142 and 144 are provided, in the preferred implementation, to ensure that the quality of service session is configured correctly between the mobile node and the correspondent node. Once the quality of service session is set-up, then the data from the mobile node to the correspondent node is not sent and received via the proxy servers. The proxy servers are only used during the set-up of the RSVP session.

Thus the provision of the foreign network proxy server ensures that an RSVP quality of service is configured for data sent from the mobile node to the correspondent node. The proxy servers shown in Figure 5 can thus be considered to be "RSVP proxy servers". The proxy servers dynamically adapt the source of the RSVP Reservation messages to follow the movement of the mobile node and in the meantime, guarantee that the flow identification information and quality of service information match the data flows directed according to standard IP.

It will be appreciated from the foregoing description that it is essential that the proxy server (or the equivalent functionality of the proxy server) is provided in the foreign network and the correspondent network if a quality of service session is to be configured in IP when a mobile node in a foreign network initiates a communication with a correspondent node.

The provision of the RSVP proxy servers (or its functional equivalent) guarantees that the established RSVP session follows the movement of the mobile node whilst at the same time recording the correct flow information matching that of the data flows which follow that same path of the RSVP session, regardless of the change of the mobile node's point of network attachment.

No host terminal, when receiving, will know whether the host terminal it is in communication with is a mobile node, or whether it is in a foreign network having an RSVP proxy server. To ensure support of RSVP with IP for communication from mobile nodes, each network which is capable of receiving messages should be provided with a proxy server (or its equivalent functionality) with the functions as described herein.

The provision of the correspondent node proxy server, however, has the advantage that it enables terminals in the correspondent node not having RSVP functionality to initiate RSVP sessions. The proxy server provides a technique for configuring a quality of service session which is both platform and application independent. By providing a dedicated means for establishing quality of service sessions, then current and future quality of service incapable host terminals can have a quality of service session set-up and thus their quality of service control enabled across the transmit path to their communication peers. The requirements for complicated and intensive computing as induced in many quality of service control signaling and control mechanisms, and strain on battery power for wireless/mobile terminals, is avoided.

In an alternative application, as mentioned consistently hereinabove, the functionality of the proxy server performed in the foreign network is performed in the mobile node itself. In such an application the mobile node will already be RSVP capable, and will have an RSVP daemon to support standard RSVP sessions. In such an application responsive to receipt of the modified Path message from the home network the mobile node will generate the standard RSVP message format shown in Figure 10(c). The proxy server functionality embedded in the RSVP daemon of the mobile node will then modify this Reservation message to generate the modified Reservation message of Figure 10(d). The modified Reservation message is then transmitted directly from the mobile node.

It should be noted that the examples described herein throughout this text utilise standard RSVP. No change to the standard RSVP is envisaged or proposed.

In order to ensure the data flow from the mobile node to the correspondent node is supported by the configured quality of service session, it is essential to ensure that the data messages sent by the mobile node are adapted such that the source address is identified as the mobile node's care-of address. Similarly the data messages received in the correspondent network must be adapted to show the source address as the mobile node's home address before receipt by the correspondent node, since there is no requirement for the correspondent node to be aware of the mobile node's mobility.

In accordance with the embodiment of this technique shown in Figure 5, the correspondent agent is provided in the correspondent network and the foreign agent is provided in the foreign network to ensure the necessary swapping of the source address on sending and receiving the data messages.

The foreign agent will be configured under the control of the foreign network proxy server 144, once the quality of service session has been set-up, to intercept all messages sent by the mobile node 8. Thus the foreign agent intercepts all messages sent by the mobile node 8 by identifying the home address of the mobile node in the source address field of the message. The foreign agent then adapts the message by replacing the source address with the care-of address of the mobile node.

The correspondent agent will similarly be configured by the correspondent node proxy server 142, once the quality of service session is set up, to intercept all messages having a source address corresponding to the care-of address of the mobile node (whether co-located care-of address or foreign agent care-of address). Thus the correspondent agent intercepts all messages sent by the mobile node 8 identifying the care-of address of the mobile node in the source field. The correspondent agent then adapts the message by replacing the source address with the mobile node's home address and forwarding it onto the correspondent node 10.

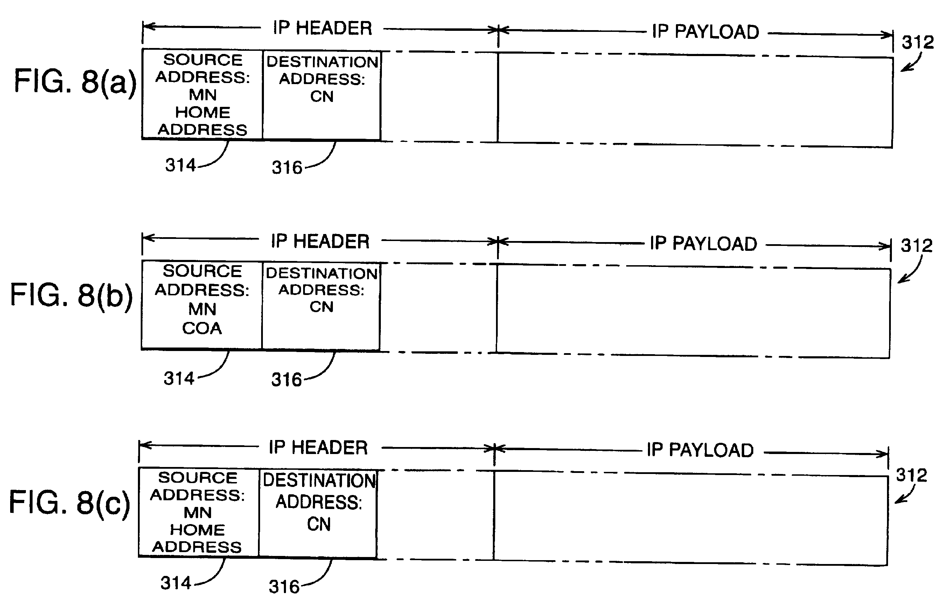

Referring to Figure 8(a), the general structure of IP packets sent by the mobile node 8 is illustrated. In accordance with standard IP, the IP packets 312 have a source address 314 identifying the mobile node's home address and a destination address 316 identifying the correspondent node.

These IP packets are intercepted by the foreign agent 7, and the source address substituted. Thus, as shown in Figure 8(b), the foreign agent adapts the IP packets 312 to have a source address 314 corresponding to the mobile node's care-of address. The correspondent agent 200 receives the thus adapted IP packets and identifies the care-of address, and intercepts the IP packets. The correspondent agent then re-substitutes the source address 314 in the IP packets 312 for the mobile node's home address as shown in Figure 8(c), and the IP packets are then forwarded onto the correspondent node. The correspondent node therefore does not have to be aware of the mobility of the mobile node.

The above example describes co-located care-of address mode where the foreign agent is utilised to adapt the source address of the IP packets, the foreign agent otherwise not being used in co-located care-of address mode. Alternatively, the foreign agent need not be used at all in co-located care-of address mode. The adaptation of the source address may be performed in the mobile node itself, the mobile node being adapted to directly generate IP packets having the format shown in Figure 8(b).

In foreign agent care-of address mode, the foreign agent is always provided in the foreign network and therefore may be more conveniently utilised for the substitution of the mobile node's home address. However, even in foreign agent care-of address mode the mobile node itself may still be advantageously adapted to provide for the necessary substitution of the source address. In this scenario then, even in foreign agent care-of address working mode the foreign agent is not utilised for sending data from the mobile node to the correspondent node. In foreign agent care-of address mode, the IP packets generated and converted will be the same as shown in Figure 8, except the foreign agent care-of address will be included in place of the mobile node care-of address.

Regardless of the means provided in the foreign network for providing the substitution of the source address, it is essential to provide the correspondent agent, or some other means, in the correspondent network.

Provision of the correspondent agent ensures that the correspondent node has no requirement to be aware of the mobility of the mobile node.

It will be appreciated that the required functionality of the correspondent agent may be provided by other means. For example the proxy server 142 may be further adapted to provide the necessary functionality. The correspondent agent may, for example, also perform the functionality of a home agent or foreign agent. Similarly the foreign agent may provide the functionality of a home agent (and a correspondent agent) for other host terminals.

Thus RSVP quality of service is supported in mobile IP when the mobile node sends data to a correspondent node.

It is a requirement to support a quality of service session for a mobile node in a foreign network desiring to send data messages to a correspondent node that the foreign network in which the mobile node is located must have a proxy server or its functional equivalent. The correspondent node must also have a proxy server or its functional equivalent.

In an alternative application, the functionality of the proxy server performed in the foreign network is performed in the mobile node itself, and the functionality of the proxy server performed in the correspondent network is performed in the correspondent node itself. In such an application the mobile node and the correspondent node will already be RSVP capable, and will have an RSVP daemon to support standard RSVP sessions.

Of course, only one or the other of the mobile node and the correspondent node may include the functionality of the proxy server. That is the mobile node may include the functionality of the proxy server, and the correspondent node be associated with a proxy server, or vice versa.

It should be noted that the examples described herein throughout this text utilise standard RSVP. No change to the standard RSVP is envisaged or proposed.

It should also be appreciated that in the event that the functionality of the correspondent network proxy server being included in the correspondent node itself, then it may be necessary for two quality of service sessions to be configured between the mobile node and the correspondent node: a first between the mobile node and the correspondent agent, and a second between the correspondent agent and the correspondent node. This is because all data is sent via the correspondent agent to the correspondent node.

It should be appreciated that the quality of service request generated by the mobile node in step 250 (in the example of Figure 6) may in fact be a Path message. Similarly all other request s referred to with reference to Figure 6 may be Path messages and all other replies, acknowledgements or confirmations may be Reservation messages.

## Claims

1. A method of configuring a quality of service session between a mobile node, having a home address in a home network and being temporarily attached in a foreign network, and a correspondent node in a correspondent network, wherein the mobile node generates a quality of service session request identifying the source address as the mobile node's home address, the method comprising modifying the quality of service request to identify the source address as the mobile node's address in the foreign network.

2. The method of claim 1, wherein the step of modifying the quality of service session request is carried out in the foreign network, the method further comprising the step of further modifying the quality of service session request in the correspondent network to identify the source address as the mobile node's home address.

3. The method of claim 1 or claim 2 wherein the correspondent node generates a quality of service reply identifying the destination address as the mobile node's home address, the method further comprising modifying the quality of service session reply to identify the mobile node's address in the foreign network.

4. The method of claim 3 wherein the step of modifying the quality of service reply is carried out in the correspondent network, the method further comprising the step of further modifying the quality of service reply in the foreign network to identify the destination address as the mobile node's home address.

5. The method of any one of claims 1 to 4 wherein once the quality of service session is configured, the source address of all IP packets from the mobile node is modified to identify the mobile node's address in the foreign network.

6. The method of claim 5 wherein the source address of all IP packets is modified in the foreign network, the source address being further modified in the correspondent network to the mobile node's home address.

7. A mobile IP environment capable of supporting a quality of service session between a mobile node, having a home address in a home network and being temporarily attached in a foreign network, and a correspondent node in a correspondent network, wherein the foreign network includes means associated with the mobile node for generating a modified quality of service request identifying the source address as the mobile node's address in the foreign network.

8. The mobile IP environment of claim 7 in which the correspondent network includes means associated with the correspondent node for generating a further modified quality of service request identifying the source address as the mobile node's home address.

9. The mobile IP environment of claim 8 in which the means associated with the correspondent node generates a modified quality of service reply having a mobile node care-of address in the foreign network.

10. The mobile IP environment of claim 9 when in which the means associated with the mobile node generates a further modified quality of service reply having a destination address of the mobile node's home address.

11. The mobile IP environment of any one of claims 7 to 10 in which the mobile node is adapted to provide the means associated with the mobile node.

12. The mobile IP environment of any one of claims 7 to 10 in which a proxy server provides the means associated with the mobile node.

13. The mobile IP environment of any one of claims 8 to 10 in which the correspondent node is adapted to provide the means associated with the correspondent node.

14. The mobile IP environment of any one of claims 8 to 10 in which a proxy server provides the means associated with the correspondent node.

15. The IP environment of any one of claims 7 to 14 further comprising means for modifying the source address of all IP packets from the mobile node to identify the mobile node's address in the foreign network once the quality of service session is configured.

16. The IP environment of claim 15 further comprising means in the correspondent network for further modifying the source address of all IP packets from the mobile node to the mobile node's home address.

17. The IP environment of claim 15 in which the mobile node is adapted to provide the means for modifying the source address.

18. The method of claim 16 or claim 17 in which the means in the correspondent network is a correspondent agent.
